# EUROPEAN PATENT SPECIFICATION

(11) **EP 3 751 449 B1**
(45) Date of publication and mention of the grant of the patent: **24.09.2025**
(21) Application number: 19751258.5
(22) Date of filing: 30.01.2019
(51) Int. Cl.: G06V 40/13, H04M 1/02

(54) **TERMINAL DEVICE AND FABRICATION METHOD THEREFOR**
ENDGERÄT UND HERSTELLUNGSVERFAHREN DAFÜR
DISPOSITIF TERMINAL ET SON PROCÉDÉ DE FABRICATION

(30) Priority: 09.02.2018 CN 201810135386
(43) Date of publication of application: 16.12.2020
(73) Proprietor: Vivo Mobile Communication Co., Ltd., Dongguan, Guangdong 523860 (CN)
(72) Inventor: WANG, Jianfeng, Dongguan, Guangdong 523860 (CN)
(74) Representative: Lavoix
(86) International application number: PCT/CN2019/073852
(87) International publication number: WO 2019/154207

(56) References cited:
- EP-A1- 3 683 650
- CN-A- 104 881 196
- CN-A- 105 184 228
- CN-A- 105 676 953
- CN-A- 106 919 914
- CN-A- 106 991 383
- CN-A- 106 991 383
- CN-A- 107 577 278
- CN-A- 108 363 976
- US-A1- 2013 259 329
- US-A1- 2016 291 718
- US-A1- 2017 003 770

## Description

### TECHNICAL FIELD

The present disclosure relates to the technical field of a terminal, in particular to a terminal and a method of manufacturing the terminal.

### BACKGROUND

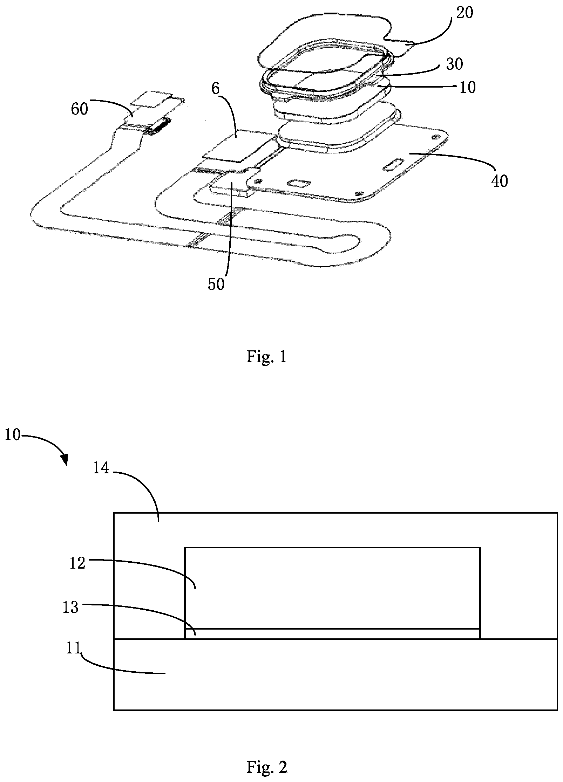

Fig. 1 is a schematic diagram showing an assembly structure of a fingerprint module on a mobile phone in the related art. As shown in Fig. 1, the fingerprint module on the mobile phone in the related art may be separately designed, and can include a fingerprint chip package 10, a protective film 20, a metal ring 30, a flexible printed circuit (FPC) 40, a component 50 and a connector 60. As shown in Fig. 2, the fingerprint chip package 10 may include a substrate 11, a fingerprint chip die 12 provided on the substrate 11, a Die Attach Film (DAF) 13 arranged between and connected to the substrate 11 and the fingerprint chip die 12, and an encapsulation layer 14, which can include a sensor pattern for collecting fingerprint information of a finger and generating a corresponding sensing signal, and is arranged on the fingerprint chip die 12.

In the related art, the fingerprint module may be designed separately under a Liquid Crystal Display Module (LCM). The disadvantage of this design is that due to size limitation of the fingerprint chip package 10 requires a dedicated space to be reserved for the fingerprint module. The fingerprint module is generally arranged on the bottom of the front of the mobile phone, the side of the mobile phone, or the back of the mobile phone. When the fingerprint module is placed on the bottom of the front of the mobile phone, it is difficult to achieve a sufficiently large screen-to-body ratio. When the fingerprint module is placed on the side of the mobile phone, the fingerprint identification rate may be low enough due to the size of the fingerprint identification sensor to adversely impact the user experience. When the fingerprint module is placed on the back of the mobile phone, the industry design may be adversely affected.

It can be seen that the design of a fingerprint module arranged under a liquid crystal display may be limited by the thickness of the fingerprint module when the fingerprint module is attached under an LCM, which can impact the structure of the mobile phone and/or the battery size.

CN 107577278 A discloses a display screen module and a mobile terminal.

CN 106991383 A discloses a fingerprint module, a display screen and a mobile terminal.

US 2013/259329 A1 discloses a fingerprint sensor packaging and methods.

US 2016/291718 A1 discloses a differential readout for sensor array. CN 105676953 A discloses a mobile terminal with a fingerprint sensor packaging structure and a manufacturing method thereof.

### SUMMARY

The purpose of the technical solution of the present disclosure is to provide a terminal and a method of manufacturing the terminal, which can solve the problem that the placement of the fingerprint module is limited due to the limited size of the fingerprint module in the related art.

Accordingly, the present invention provides a terminal and a method of manufacturing the terminal as defined in the appended claims.

The beneficial effects brought by the embodiments of the present disclosure are as follows.

In the terminal provided by the embodiment of the present disclosure, the fingerprint collection layer is provided on the display module, that is, the fingerprint collection structure (sensor pattern) on the fingerprint chip die of the fingerprint identification assembly may be separately integrated into the display module, and the fingerprint collection structure may be led out from the flexible circuit board to connect to the fingerprint identification module. In this way, since the fingerprint collection layer does not need to be packaged, it can be directly attached to the display module, and the thickness of the fingerprint identification assembly can be minimize; and the placement area of the fingerprint collection layer is not limited, it can be integrated at any position on the display module or the entire display module is a fingerprint identification area (i.e., the fingerprint collection layer can cover the entire display area of the display module). In addition, the fingerprint collection layer may be led out from the flexible circuit board and is connected to a sensor processing module without impacting the structure of the terminal or the size of the battery in the terminal. In addition, since the fingerprint identification assembly is attached to the display module, it can not only be placed under the display screen, but could also be placed above the display screen.

### BRIEF DESCRIPTION OF THE DRAWINGS

Fig. 1 is a schematic structural diagram of a fingerprint module in the related art;
Fig. 2 is a schematic structural diagram of a fingerprint chip package in the related art;
Fig. 3 is a schematic perspective view of a terminal provided by a first embodiment of the present disclosure;
Fig. 4 is a schematic cross-sectional view of the terminal provided by the first embodiment of the present disclosure;
Fig. 5 is a schematic perspective structural view of a terminal provided by a second embodiment of the present disclosure;
Fig. 6 is a schematic cross-sectional view of the terminal provided by the second embodiment of the present disclosure;
Fig. 7 is a schematic diagram of signal lines in a fingerprint collection layer of a terminal provided by an embodiment of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments.

In view of the problem in the related art that the fingerprint module is designed separately, the placement options for the fingerprint identification module are limited based on the size of the fingerprint module. Embodiments of the present disclosure provide a terminal and a method of manufacturing the terminal that provide more freedom for the choice of the placement of the fingerprint identification module.

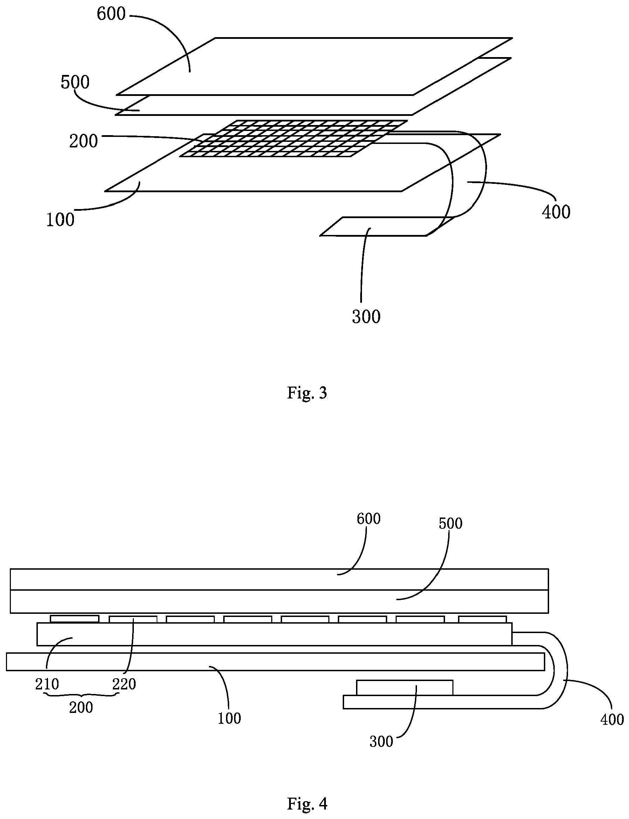

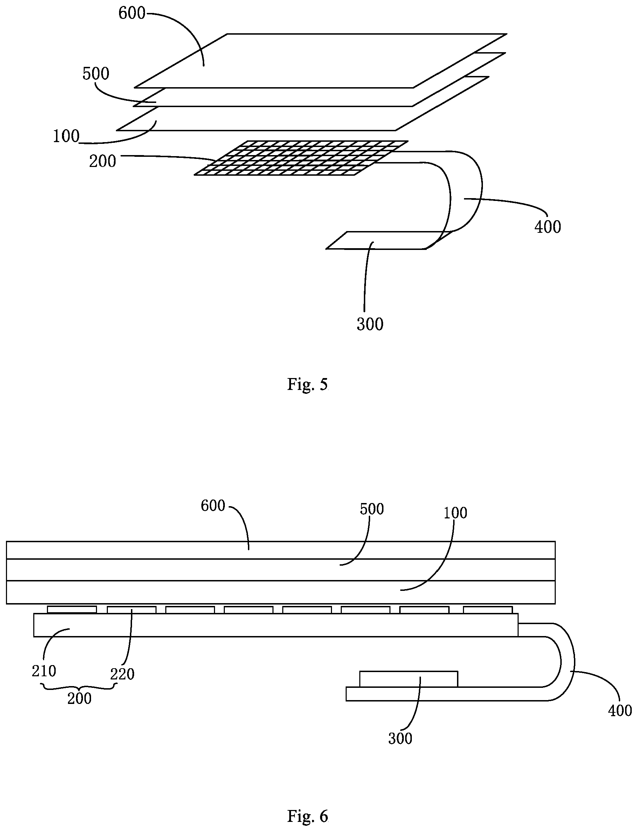

Figs. 3 to 6 are schematic structural diagrams of a terminal provided in embodiments of the present disclosure, in which only components such as a display screen and a fingerprint identification assembly are illustrated, and components such as a backlight module are not illustrated.

As shown in Figs. 3 to 6, a terminal provided by embodiments of the present disclosure includes a display module and a fingerprint identification assembly. The fingerprint identification assembly includes: a fingerprint collection layer 200, attached to the display module and used to collect fingerprint information; a fingerprint identification module 300, used to identify the collected fingerprint information; and a flexible circuit board 400, led out from a side edge of the fingerprint collection layer 200 and connected to the fingerprint identification module 300.

In a terminal provided by embodiments of the present disclosure, the fingerprint collection layer 200 may be provided on the display screen 100, and the fingerprint collection layer 200 may be a fingerprint collection structure (sensor pattern) on a fingerprint chip die of the fingerprint identification assembly. The fingerprint collection structure on the fingerprint chip die of the fingerprint identification assembly in the related art may be separately integrated into the display module, and the fingerprint collection structure may be led out from the flexible circuit board 400 and connected to the fingerprint identification module 300. In this way, since the fingerprint collection layer 200 does not need to be packaged, it can be directly attached to the display module, and the thickness of the fingerprint identification assembly can be minimized; and the placement area of the fingerprint collection layer 200 is not limited: it can be integrated at any position on the display module, or the entire display module can include a fingerprint identification area (i.e., the fingerprint collection layer 200 can cover the entire display area of the display module). In addition, the fingerprint collection layer 200 may be led out from the flexible circuit board 400 and is connected to a sensor processing module without impacting the structure of the terminal or the size of the battery in the terminal. In addition, since the fingerprint identification assembly is attached to the display screen 100, it can not only be placed under the display screen 100, but could also be placed above the display screen 100.

It should be noted that in the above description, the term "display module" refers to a screen portion of a terminal including a display screen 100. The display module may include at least a display screen 100, a touch screen 500, and a protective cover plate 600, and the fingerprint collection 200 layer may be attached to one side surface of any one of the display screen 100, the touch screen 500, and the protective cover plate 600.

In a terminal provided by the embodiments of the present disclosure, as shown in Figs. 3 to 7, the fingerprint collection layer 200 includes: a substrate layer 210; a detection element (not shown in the figure) provided on the substrate layer 210; and a signal line 220 disposed on the substrate layer 210. The signal line 220 includes a reception signal line (Rx) 221 and a transmission signal line (Tx) 222 that are arranged perpendicularly with respect to each other.

In the above description, the detection element and the signal line 220 in the structure of the fingerprint collection layer 200 may comprise a fingerprint identification sensor pattern on a fingerprint identification chip die of a fingerprint chip package in the fingerprint identification module 300. The substrate layer 210 may be used to provide a film layer for the detection element and the signal line 220 to form the detection element and the signal line 220 on the substrate layer 210.

The fingerprint identification assembly may be any of various fingerprint identification assemblies, for example, an optical fingerprint identification assembly, a semiconductor fingerprint identification assembly, an ultrasonic fingerprint identification assembly, etc. The semiconductor fingerprint identification assembly would include a capacitive fingerprint identification assembly or an inductive fingerprint identification assembly. It would be understood that the fingerprint identification assembly is not limited to the above types of fingerprint identification assembly.

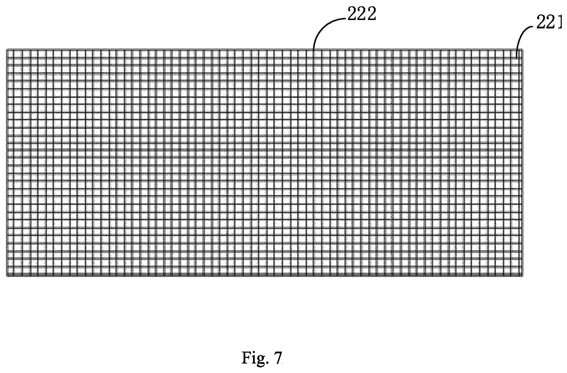

Taking an optical fingerprint identification assembly as an example, the detection element in the fingerprint collection layer 200 may include a photoelectric sensitive element, as shown in Fig. 7, the signal line 220 may include a reception signal line (Rx) 221 and a transmission signal line (Tx) 222 that are arranged perpendicularly with respect to each other. The structure and working principle of the optical fingerprint identification assembly are well known to those skilled in the art, and the terminal provided in the embodiments of the present disclosure may integrate the fingerprint collection structure (sensor pattern) on the fingerprint identification chip die of the fingerprint chip package in the optical fingerprint identification assembly on one side surface of the display screen 100. Description of the specific structures of the detection element and the signal line 220 of the optical fingerprint collection layer 200 is not repeated herein.

Similarly, when the fingerprint identification assembly is a semiconductor fingerprint identification assembly or an ultrasonic fingerprint identification assembly, description of the specific structures of the detection element and the signal line 220 in the fingerprint collection layer 200 is not repeated herein.

In an embodiment of the present disclosure, the substrate layer 210 serves as a film layer of the detection element and the signal line 220. The substrate layer 210 may be made of optically transparent materials such as silicon, glass, acrylic, or optical film.

In addition, in the embodiment of the present disclosure, the display module includes a driver integrated circuit (IC), and the fingerprint identification module 300 is integrated with the driver IC.

In an embodiment, a driver IC of the display screen 100 may be integrated with the fingerprint identification module 300. The fingerprint identification module 300 and the driver IC of the display screen 100 can be disposed on one side of the display screen 100 away from its display surface, and the flexible circuit board 400 of the fingerprint identification assembly is led out from one side of the fingerprint collection layer 200 and bent toward a side of the fingerprint collection layer 200 away from the display surface of the display screen 100, and connected to the fingerprint identification module 300. Another flexible circuit board 400 can be connected to one edge of the display screen 100, the flexible circuit board 400 on the display screen 100 being bent toward a side of the fingerprint collection layer 200 away from the display surface of the display screen 100, and connected to a driver IC. In this way, the occupied space can be further reduced, and the entire terminal layout can be utilized. It can be understood that, in practical applications, the fingerprint identification module 300 may also be disposed separately.

In an aspect, as a terminal provided by the present disclosure integrates the fingerprint collection layer 200 on the display module, the fingerprint collection layer 200 may be disposed either above or under the display screen 100, and the display screen 100 may include a display surface and a back surface opposite to the display surface, the touch screen 500 may be disposed on a side of the display surface of the display screen 100, and the protective cover plate 600 may be disposed on a side of the touch screen 500 away from the display screen 100. In one embodiment, as shown in Figs. 3 to 6, the fingerprint collection layer 200 is attached to the back surface of the display screen 100. In another embodiment, the fingerprint collection layer 200 is attached between the display screen 100 and the touch screen 500. In addition, the fingerprint collection layer 200 may be attached between the touch screen 500 and the protective cover plate 600.

Compared with a fingerprint identification module that can only be arranged under the display screen 100 due to its size, the terminal provided in the embodiments of the present disclosure, enables placement of the fingerprint collection layer 200 without limitation.

An embodiment of the present disclosure provides a method of manufacturing a terminal, which is used to manufacture the terminal provided by the embodiments of the present disclosure. The method includes the following steps.

Step S1: Forming a fingerprint collection layer 200 on a display module.

Step S2: Binding the fingerprint collection layer 200 and a flexible circuit board 400.

Step S3: Binding the flexible circuit board 400 and a fingerprint identification module 300.

In accordance with the method provided in the embodiments of the present disclosure, the fingerprint collection layer 200 is directly formed on the display module. The fingerprint collection layer 200 includes a fingerprint collection structure (sensor pattern) on a fingerprint chip die of the fingerprint identification assembly. The fingerprint collection structure on the fingerprint chip die of the fingerprint identification assembly may be separately integrated into one side surface of the display screen 100, and the fingerprint collection structure may be led out from the flexible circuit board 400 and connected to the fingerprint identification module 300. In this way, since the fingerprint collection layer 200 does not need to be packaged, it can be directly attached to the display module, and the thickness of the fingerprint identification assembly can be minimized; and the placement area of the fingerprint collection layer 200 is not limited: it can be integrated at any position on the display module, or the entire display module can include a fingerprint identification area (i.e., the fingerprint collection layer 200 can cover the entire display area of the display module). In addition, the fingerprint collection layer 200 may be led out from the flexible circuit board 400 and is connected to a sensor processing module without impacting the structure of the terminal or the size of the battery in the terminal. In addition, since the fingerprint identification assembly is attached to one side surface of the display screen 100, it can not only be placed under the display screen 100, but could also be placed above the display screen 100.

It should be noted that in the above description, the term "display module" refers to a screen portion of a terminal including a display screen 100. The display module may include at least a display screen 100, a touch screen 500, and a protective cover plate 600, and the fingerprint collection layer 200 may be attached to one side surface of any one of the display screen 100, the touch screen 500, and the protective cover plate 600.

One of skill would understand that, in the above description, the order of steps S1, S2, and S3 is not limited.

The above step S1 can be implemented in at least the following ways.

In a first way, a substrate layer 210 is formed on one side surface of the display screen 100, the touch screen 500, or the protective cover plate 600, and a detection element and a signal line 220 are formed on the substrate layer 210, to create the fingerprint collection layer 200.

The fingerprint collection layer 200 is directly formed on one side surface of the display screen 100, the touch screen 500, or the protective cover plate 600. The fingerprint collection layer 200 may be manufactured by a process used for a fingerprint collection structure (sensor pattern) on a fingerprint chip die, for example etching, as would be understood by one of skill in the art. The fingerprint collection layer 200 may be manufactured by exposure, development, etching, or other processes.

In a second way, the substrate layer 210 is formed, and the detection element and the signal line 220 are formed on the substrate layer 210 to create the fingerprint collection layer 200. The fingerprint collection layer 200 is attached to one side surface of the display screen 100, the touch screen 500, or the protective cover plate 600.

After the fingerprint collection layer 200 is separately manufactured, it is then attached to a side surface of the display screen 100, the touch screen 500, or the protective cover plate 600 using an attaching method (e.g., Glass+Film+Film (GFF)). The fingerprint collection layer 200 may be manufactured by a process used for a fingerprint collection structure (sensor pattern) on a fingerprint chip die in the related art, for example etching. The fingerprint collection layer 200 may be manufactured by exposure, development, etching, or other processes.

The above embodiments are for illustrative purposes only, and the present disclosure is not limited thereto. A person skilled in the art may make further modifications and improvements which would also fall within the scope of the present disclosure as defined by the appended claims.

## Claims

1. A terminal comprising a display module and a fingerprint identification assembly, wherein
the fingerprint identification assembly comprises:
a fingerprint collection layer (200), attached to the display module and configured to collect fingerprint information;
a fingerprint identification module (300), configured to identify the fingerprint information; and
a flexible circuit board (400), wherein the flexible circuit board is led out from a side edge of the fingerprint collection layer, and is connected to the fingerprint identification module, **characterized in that**
the fingerprint collection layer includes a fingerprint collection structure on a fingerprint chip die,
wherein the display module comprises:
a display screen (100), including a display surface and a back surface opposite to the display surface;
a touch screen (500), arranged on a side of the display surface of the display screen; and
a protective cover plate (600), arranged on a side of the touch screen distal to the display screen,
the fingerprint collection layer is attached to a side of the display screen distal to the protective cover plate.

2. The terminal according to claim 1, wherein the fingerprint collection layer comprises: a substrate layer (210), a detection element disposed on the substrate layer, and a signal line (220) disposed on the substrate layer, and the signal line comprises a reception signal line (221) and a transmission signal line (222), the reception signal line and the transmission signal line being arranged substantially perpendicular with respect to each other.

3. The terminal according to claim 2, wherein the substrate layer (210) is made of one of silicon, glass, acrylic, or optical film.

4. The terminal according to claim 1, wherein the fingerprint identification assembly is one of an optical fingerprint identification assembly, a semiconductor fingerprint identification assembly, or an ultrasonic fingerprint identification assembly.

5. The terminal according to claim 1, wherein the display module includes a driver IC, and the fingerprint identification module is integrated with the driver IC.

6. A method of manufacturing the terminal according to any one of claims 1 to 5, the method comprises:
forming the fingerprint collection layer on the display module, binding the fingerprint collection layer to the flexible circuit board, and binding the flexible circuit board to the fingerprint identification module,
wherein the display module includes a display screen (100), a touch screen (500), and a protective cover plate (600), the forming the fingerprint collection layer on the display module comprises:
attaching the fingerprint collection layer to a side of the display screer
distal to the protective cover plate.

7. The method according to claim 6, wherein the fingerprint collection layer comprises: a substrate layer (210), a detection element disposed on the substrate layer, and a signal line (220) disposed on the substrate layer, the signal line including a reception signal line (221) and a transmission signal line (222) that are arranged substantially perpendicularly with respect to each other,
wherein the forming the fingerprint collection layer on the display module comprises:
forming the substrate layer on the back surface of the display screen, and
forming the detection element and the signal line on the substrate layer to create the fingerprint collection layer.

8. The method according to claim 7, wherein the forming the substrate layer on one the back surface of the display screen comprises:
forming the substrate layer;
forming the detection element and the signal line on the substrate layer to create the fingerprint collection layer; and
attaching the fingerprint collection layer on the back surface of the display screen.

## Patentansprüche

1. Endgerät, umfassend ein Anzeigemodul und eine Fingerabdruck-Identifizierungsanordnung, wobei
die Fingerabdruck-Identifizierungsanordnung Folgendes umfasst:
eine Fingerabdruck-Sammelschicht (200), die an dem Anzeigemodul angebracht und konfiguriert ist, um Fingerabdruckinformationen zu sammeln;
ein Fingerabdruck-Identifizierungsmodul (300), das konfiguriert ist, um die Fingerabdruckinformationen zu identifizieren; und
eine flexible Leiterplatte (400), wobei die flexible Leiterplatte von einem Seitenrand der Fingerabdruck-Sammelschicht nach außen geführt ist und mit dem Fingerabdruck-Identifizierungsmodul verbunden ist, **dadurch gekennzeichnet, dass**
die Fingerabdruck-Sammelschicht eine Fingerabdruck-Sammelstruktur auf einem Fingerabdruck-Chip umfasst,
wobei das Anzeigemodul Folgendes umfasst:
einen Anzeigebildschirm (100), der eine Anzeigefläche und eine Rückfläche gegenüber der Anzeigefläche beinhaltet;
einen Berührungsbildschirm (500), der auf einer Seite der Anzeigefläche des Anzeigebildschirms angeordnet ist; und
eine Schutzabdeckplatte (600), die auf einer Seite des Berührungsbildschirms distal von dem Anzeigebildschirm angeordnet ist,
die Fingerabdruck-Sammelschicht auf einer Seite des Bildschirms entfernt von der Schutzabdeckplatte angebracht ist.

2. Endgerät nach Anspruch 1, wobei die Fingerabdruck-Sammelschicht Folgendes umfasst: eine Substratschicht (210), ein auf der Substratschicht angeordnetes Erfassungselement und eine auf der Substratschicht angeordnete Signalleitung (220), und die Signalleitung eine Empfangssignalleitung (221) und eine Sendesignalleitung (222) umfasst, wobei die Empfangssignalleitung und die Sendesignalleitung im Wesentlichen senkrecht zueinander angeordnet sind.

3. Endgerät nach Anspruch 2, wobei die Substratschicht (210) aus einem von Silizium, Glas, Acryl oder optischem Film gefertigt ist.

4. Endgerät nach Anspruch 1, wobei die Fingerabdruck-Identifizierungsanordnung eine optische Fingerabdruck-Identifizierungsanordnung, eine Halbleiter-Fingerabdruck-Identifizierungsanordnung oder eine Ultraschall-Fingerabdruck-Identifizierungsanordnung ist.

5. Endgerät nach Anspruch 1, wobei das Anzeigemodul einen Treiber-IC enthält und das Fingerabdruck-Identifizierungsmodul in den Treiber-IC integriert ist.

6. Verfahren zum Herstellen des Endgeräts nach einem der Ansprüche 1 bis 5, das Verfahren umfassend :
Bilden der Fingerabdruck-Sammelschicht auf dem Anzeigemodul, Verbinden der Fingerabdruck-Sammelschicht mit der flexiblen Leiterplatte und Verbinden der flexiblen Leiterplatte mit dem Fingerabdruck-Identifizierungsmodul,
wobei das Anzeigemodul einen Anzeigebildschirm (100), einen Berührungsbildschirm (500) und eine Schutzabdeckplatte (600) beinhaltet, wobei ein Bilden der Fingerabdruck-Sammelschicht auf dem Anzeigemodul Folgendes umfasst:
Anbringen der Fingerabdruck-Sammelschicht auf einer von der Schutzabdeckplatte entfernten Seite des Bildschirms.

7. Verfahren nach Anspruch 6, wobei die Fingerabdruck-Sammelschicht Folgendes umfasst: eine Substratschicht (210), ein Erfassungselement, das auf der Substratschicht angeordnet ist, und eine Signalleitung (220), die auf der Substratschicht angeordnet ist, wobei die Signalleitung eine Empfangssignalleitung (221) und eine Sendesignalleitung (222) umfasst, die im Wesentlichen senkrecht zueinander angeordnet sind,
wobei ein Bilden der Fingerabdruck-Sammelschicht auf dem Anzeigemodul Folgendes umfasst:
Bilden der Substratschicht auf der Rückfläche des Bildschirms, und
Bilden des Erfassungselements und der Signalleitung auf der Substratschicht, um die Fingerabdruck-Sammelschicht zu bilden.

8. Verfahren nach Anspruch 7, wobei ein Bilden der Substratschicht auf einer der Rückflächen des Bildschirms Folgendes umfasst:
Bilden der Substratschicht;
Bilden des Erfassungselements und der Signalleitung auf der Substratschicht, um die Fingerabdruck-Sammelschicht zu bilden; und
Anbringen der Fingerabdruck-Sammelschicht auf der Rückfläche des Bildschirms.

## Revendications

1. Terminal comprenant un module d'affichage et un ensemble d'identification d'empreintes digitales, dans lequel
l'ensemble d'identification d'empreintes digitales comprend :
une couche d'acquisition d'empreintes digitales (200), fixée au module d'affichage et configurée pour acquérir des informations d'empreintes digitales ;
un module d'identification d'empreintes digitales (300), configuré pour identifier les informations d'empreintes digitales ; et
une carte de circuit imprimé souple (400), dans lequel la carte de circuit imprimé souple sort d'un bord latéral de la couche d'acquisition d'empreintes digitales et est reliée au module d'identification d'empreintes digitales, **caractérisé en ce que**
la couche d'acquisition d'empreintes digitales comprend une structure d'acquisition d'empreintes digitales sur une puce à empreintes digitales,
dans lequel le module d'affichage comprend :
un écran d'affichage (100), comprenant une surface d'affichage et une surface arrière opposée à la surface d'affichage ;
un écran tactile (500), disposé sur un côté de la surface d'affichage de l'écran d'affichage ; et
une plaque de protection (600), disposée sur une face de l'écran tactile distale par rapport à l'écran d'affichage,
la couche d'acquisition d'empreintes digitales est fixée sur un côté de l'écran d'affichage distal par rapport à la plaque de protection.

2. Terminal selon la revendication 1, dans lequel la couche d'acquisition d'empreintes digitales comprend : une couche de substrat (210), un élément de détection disposé sur la couche de substrat, et une ligne de signal (220) disposée sur la couche de substrat, et la ligne de signal comprend une ligne de signal de réception (221) et une ligne de signal de transmission (222), la ligne de signal de réception et la ligne de signal de transmission étant disposées de manière sensiblement perpendiculaire l'une par rapport à l'autre.

3. Terminal selon la revendication 2, dans lequel la couche de substrat (210) est constituée de silicium, de verre, d'acrylique ou de film optique.

4. Terminal selon la revendication 1, dans lequel l'ensemble d'identification d'empreintes digitales est un ensemble d'identification d'empreintes digitales optique, un ensemble d'identification d'empreintes digitales à semi-conducteur ou un ensemble d'identification d'empreintes digitales à ultrasons.

5. Terminal selon la revendication 1, dans lequel le module d'affichage comprend un circuit intégré (CI) de commande, et le module d'identification d'empreintes digitales est intégré au CI de commande.

6. Procédé de fabrication du terminal selon l'une quelconque des revendications 1 à 5, le procédé comprend :
la formation de la couche d'acquisition d'empreintes digitales sur le module d'affichage, la liaison de la couche d'acquisition d'empreintes digitales à la carte de circuit imprimé souple, et la liaison de la carte de circuit imprimé souple au module d'identification d'empreintes digitales,
dans lequel le module d'affichage comprend un écran d'affichage (100), un écran tactile (500) et une plaque de protection (600), la formation de la couche d'acquisition d'empreintes digitales sur le module d'affichage comprend :
la fixation de la couche d'acquisition d'empreintes digitales sur un côté de l'écran d'affichage
distal par rapport à la plaque de protection.

7. Procédé selon la revendication 6, dans lequel la couche d'acquisition d'empreintes digitales comprend :une couche de substrat (210), un élément de détection disposé sur la couche de substrat, et une ligne de signal (220) disposée sur la couche de substrat, la ligne de signal comprenant une ligne de signal de réception (221) et une ligne de signal de transmission (222) qui sont disposées de manière sensiblement perpendiculaire l'une par rapport à l'autre,
dans lequel la formation de la couche d'acquisition d'empreintes digitales sur le module d'affichage comprend :
la formation de la couche de substrat sur la surface arrière de l'écran d'affichage, et
la formation de l'élément de détection et de la ligne de signal sur la couche de substrat pour créer la couche d'acquisition d'empreintes digitales.

8. Procédé selon la revendication 7, dans lequel la formation de la couche de substrat sur la surface arrière de l'écran d'affichage comprend :
la formation de la couche de substrat ;
la formation de l'élément de détection et de la ligne de signal sur la couche de substrat pour créer la couche d'acquisition d'empreintes digitales ; et
la fixation de la couche d'acquisition d'empreintes digitales sur la surface arrière de l'écran d'affichage.
